# EUROPÄISCHE PATENTSCHRIFT

(11) **EP 2 772 342 B1**
(45) Veröffentlichungstag und Bekanntmachung des Hinweises auf die Patenterteilung: **20.07.2016**
(21) Anmeldenummer: 14168847.3
(22) Anmeldetag: 20.04.2011
(51) Int. Cl.: B29C 49/42, B29C 49/64, B29C 49/68

(54) **HEIZSTRECKE FÜR VORFORMLINGE**
HEATING LINE FOR PREFORMS
PARCOURS DE CHAUFFAGE POUR ÉBAUCHES

(30) Priorität: 10.05.2010 DE 102010020092
(43) Veröffentlichungstag der Anmeldung: 03.09.2014
(62) Teilanmeldung aus: 11163213.9
(73) Patentinhaber: Krones Aktiengesellschaft, 93073 Neutraubling (DE)
(72) Erfinder: Winzinger, Frank, 93073 Neutraubling (DE); Holzer, Christian, 93073 Neutraubling (DE); Schönberger, Wolfgang, 93073 Neutraubling (DE)
(74) Vertreter: Benninger, Johannes

(56) Entgegenhaltungen:
- WO-A1-2004/007170
- DE-A1- 10 145 456
- JP-A- 2 034 321

## Beschreibung

Die vorliegende Erfindung betrifft eine Heizstrecke mit mindestens einer Handhabungsvorrichtung zur Halterung von Vorformlingen beim Durchlaufen der Heizstrecke, wobei die Vorformlinge einen oberen offenen Mündungsbereich und ein Außengewinde sowie einen unteren geschlossenen Bodenbereich aufweisen, wobei unterhalb des Außengewindes ein Tragring angeordnet ist, und wobei die Handhabungsvorrichtung mindestens ein Haltemittel umfasst, das zumindest teilweise reibschlüssig in den Mündungsbereich der Vorformlinge eingreift.

Solche Heizstrecken sind unteranderem in WO2004/007170, JP2034321 und DE10145456 beschrieben.

Bei der Herstellung von Kunststoffflaschen werden so genannte Vorformlinge aus thermoplastischem Material, beispielsweise PET, verwendet. Diese werden erwärmt und in Streckblasmaschinen in eine gewünschte Behälterform gebracht. Insbesondere werden die Vorformlinge in einer Förderstrecke durch eine Heizeinrichtung mittels einer Haltevorrichtung gefördert, ehe sie in der Blasstation verarbeitet werden.

Jeder Vorformling ist bereits mit einem oben offenen Mündungsbereich sowie in der Regel mit einem am Mündungsbereich angebrachten Außengewinde ausgebildet. Dieser Mündungsbereich entspricht im Wesentlichen dem Mündungsbereich der fertigen Flasche. Die Vorformlinge sind üblicherweise Spritzgussteile, die in der Heizeinrichtung auf die benötigte Umformtemperatur und anschließend in der Blasvorrichtung in die endgültige Form der Behälter beziehungsweise Flaschen gebracht werden. Beim derzeitigen Standard-Prozess werden die Vorformlinge im Heizmodul von einer Spindel oder einem Dorn gehalten, die drehbar in einem Kettenglied gelagert sind. Die Spindel beziehungsweise der Dorn greift reibschlüssig in den oben offenen Mündungsbereich des Vorformlings und fixiert diesen. Im Heizmodul werden mehrere Kettenglieder mit den darin gelagerten Spindeln verbunden und bilden eine endlos umlaufende Kette.

An der außenliegenden Seite der geraden Längsseiten des Heizmoduls befinden sich die in Heizkästen angeordneten Heizeinrichtungen, die dem Vorformling mittels IR-Strahlung Wärme zuführen. An der Innenseite und am Boden der Heizkästen sind normalerweise Reflektoren angebracht, um die ausgestrahlte IR-Strahlung möglichst gut auszunutzen und in gewünschter Weise auf die zu erwärmenden Vorformlinge umzulenken.

Weiterhin wird der Mündungsbereich der Vorformlinge bei den meisten bekannten Anlagen durch einen Luftstrom vor zu großer Erwärmung geschützt. Dies ist notwendig, da bei zu großer Erwärmung der Mündungsbereich der Vorformlinge im nachfolgenden Blasformverfahren deformiert werden könnte, wodurch die dabei entstehenden Behälter als fehlerhaft ausgesondert werden müssten. Um den Mündungsbereich der Vorformlinge zu schützen, kommt beispielsweise eine zumindest teilweise bündig zur Unterseite des Tragrings des Vorformlings angeordnete Abschirmplatte zur Anwendung. Diese Abschirmplatte kann reflektierend ausgebildet sein und verhindert, dass die gesamte Strahlerwärme auf den Mündungsbereich beziehungsweise auf das Außengewinde des Vorformlings trifft. Herkömmlicherweise weist eine solche Abschirmplatte reflektierende Eigenschaften auf, kann aber ggf. auch Strahlungsanteile absorbieren.

Da die Vorformlinge hängend über Reibschluss durch die Heizstrecke transportiert werden, besteht die Gefahr, dass sich die reibschlüssige hängende Halterung der Vorformlinge während ihres Transports durch die Heizstrecke lockert und die Vorformlinge von der Halterung lösen.

Das Ziel der vorliegenden Erfindung ist deshalb, eine verbesserte Heizstrecke beziehungsweise Handhabungsvorrichtung für die Vorformlinge vorzuschlagen, bei welchen die Vorformlinge während des Transports verliersicher aufgebracht werden beziehungsweise gehalten und integriert sind, so dass ein Verlieren der Vorformlinge in der Heizstrecke weitestgehend vermieden werden kann.

Das Ziel der Erfindung wird durch eine Zentriereinrichtung erreicht, welche die Merkmale des Patentanspruchs 1 umfasst. Weitere vorteilhafte Ausgestaltungen werden durch die Unteransprüche beschrieben.

Die Erfindung betrifft eine Heizstrecke beziehungsweise einen Ofen zur Erwärmung von Vorformlingen zur weiteren Verarbeitung in einer Streckblasvorrichtung. Die Heizstrecke umfasst mindestens eine Handhabungsvorrichtung zur Halterung von Vorformlingen beim Durchlaufen der Heizstrecke. Die Handhabungsvorrichtung weist Transportmittel auf, die für die Bewegung der Vorformlinge entlang einer Transportstrecke notwendig sind. Es kann zusätzlich vorgesehen sein, dass die Vorformlinge während ihres Transports um ihre Längsachse rotieren, um eine gleichmäßige Erwärmung sicherzustellen. Auf mindestens einer Seite der Heizgasse befinden sich IR-Strahler. Durch den rotierenden Transport der Vorformlinge durch die Heizgasse hindurch wird gewährleistet, dass die Vorformlinge in ihrem gesamten Umfang gleichmäßig mittels der Strahlungswärme erwärmt werden. Die Vorformlinge weisen einen oberen offenen Mündungsbereich und ein Außengewinde sowie einen unteren geschlossenen Bodenbereich auf. Alternativ können die Vorformlinge auch einen offenen Bodenbereich aufweisen. Unterhalb des Außengewindes weisen die Vorformlinge einen Tragring auf, der auch nach dem Blasformen unverändert erhalten bleiben muss, um die fertig geformten Behälter halten und handhaben zu können. Die Handhabungsvorrichtung beziehungsweise die Transportmittel umfassen mindestens ein Haltemittel, das zumindest teilweise reibschlüssig in den eben genannten Mündungsbereich der Vorformlinge eingreift.

Erfindungsgemäß ist der mindestens einen Handhabungsvorrichtung wenigstens eine mit dem Vorformling in Kontakt bringbare Zentriereinrichtung zugeordnet, die am Bodenbereich des Vorformlings angreift.

Gemäß einer bevorzugten Ausführungsform ist die Zentriereinrichtung unterhalb der Handhabungsvorrichtung angeordnet und umfasst beziehungsweise erstreckt sich über wenigstens einen Teilbereich der Heizstrecke. Ein solcher Teilbereich ist beispielsweise eine Strecke von der Übergabe der Vorformlinge von einem vorgeordneten Übergabe- beziehungsweise Sägezahnstern bis zum Beginn des Heizens.

Bei einer alternativen Ausführungsform ist es zudem möglich, dass ein solcher Teilbereich auch noch zumindest einen Teil einer vorgeordneten weiteren Heizstrecke umfasst.

Bei einer weiteren alternativen Ausführungsform ist es zudem möglich, dass sich die Zentriereinrichtung über einen Bereich erstreckt, in dem die Vorformlinge noch nicht beheizt werden und/oder in dem das Beheizen der Vorformlinge schon stattfindet.

Es ist auch denkbar, dass sich die Zentriereinrichtung über mindestens die Hälfte der gesamten Heizstrecke oder die ganze Heizstrecke erstreckt.

Weiterhin weist die Zentriereinrichtung mindestens ein Zentrierelement für die Vorformlinge auf, das den Bodenbereich der Vorformlinge von unten zumindest teilweise umgreift beziehungsweise von unten abstützt. Das mindestens eine Zentrierelement ist an einem umlaufenden Förderelement angeordnet, welches sich mit einer kontinuierlichen Transportgeschwindigkeit bewegt. Diese Transportgeschwindigkeit muss synchron zur Bewegung der Halteeinrichtung für den Halsbereich des Vorformlings sein.

Das mindestens eine Zentrierelement ist achsensymmetrisch zur Längsachse der Vorformlinge angeordnet und weist ein dem Bodenbereich der Vorformlinge angepasstes Aufnahmemittel auf. Das Zentrierelement ist zumindest während der Zentrierung achsensymmetrisch zur Längsachse der Vorformlinge angeordnet, wobei unter achsensymmetrisch unter anderem auch parallel, koaxial und kollinear verstanden werden kann.

Das Aufnahmemittel kann unterschiedlich ausgestaltet sein, beispielsweise becher-, hohlkegel-, halbkugel-, zylinder-, parabel-, ellipsen-, hyperbel- oder pyramidenförmig. Bei der Formgebung des Aufnahmemittels ist es notwendig, dass der Bodenbereich der Vorformlinge sicher vom Aufnahmemittel kontaktiert und gehalten wird.

Unter in Kontakt bringbar ist generell auch zu verstehen, dass das Herabfallen von Vorformlingen durch Kontakt mit dem Zentrierelement vermieden wird.

Die Förderbewegung der Zentriereinrichtung verläuft synchron zur Förderbewegung der Vorformlinge, wobei die Zentrierelemente der Zentriereinrichtung kurzzeitig dem Bodenbereich der Vorformlinge zustellbar sind. Diese kurzzeitige Zustellung der Zentrierelemente ist notwendig, damit die obere Fläche der Vorformlingmündung an eine Anschlagfläche des Haltemittels beziehungsweise Heizdorns gedrückt wird, um unkontrollierte Bewegungen, insbesondere ein Taumeln der Vorformlinge durch eine über einen außerhalb der Drehachse des Heizdorns liegenden Masseschwerpunkt der Vorformlinge hervorgerufene Unwucht, und das Herabfallen des Vorformlings zu vermeiden.

In anderen Worten werden die Vorformlinge an der Spindel beziehungsweise am Dorn koaxial zu diesem angebracht, um die obere, horizontale Fläche der Vorformlingmündung an die Anschlagfläche des Haltemittels anzudrücken.

Hierzu ist die Anschlagfläche des Haltemittels insbesondere senkrecht zur Drehachse angeordnet. Durch den Kontakt und eine genaue Fertigung der Vorformlinge und der Haltemittel wird auf diese Weise ein Taumeln vermieden.

Bei den Übergaben der Vorformlinge, beispielsweise vom Sägezahnstern zur Heizstrecke, wird das Haltemittel, das als sogenannte Spindel ausgebildet sein kann, über eine Zwangsführung nach unten gedrückt und taucht somit durch eine Öffnung in einer Abschirmplatte, um von innen zumindest reibschlüssig in die Mündung des Vorformlings einzugreifen, so dass dieser aus dem Sägezahnstern entnommen werden kann. Bei ungünstigen Toleranzen oder einer unzureichenden Klemmung zwischen Vorformling und Haltemittel kann es bei dieser Anordnung zu einem Herabfallen des Vorformlings kommen. Dieser würde somit in die Heizgasse fallen und dort evtl. zu Beschädigungen führen.

Wie schon erwähnt, greift das Haltemittel am Beginn der Heizstrecke von innen in die Mündung des Vorformlings ein, um diesen aus dem Sägezahnstern zu entnehmen beziehungsweise um die Vorformlinge am Ende der Heizstrecke von Klammern zu entnehmen. In diesen Bereichen muss die Sicherungseinrichtung zur Ermöglichung der Auf- beziehungsweise Entnahme der Vorformlinge in geeigneter Weise in die Entsicherungslage bewegt werden.

Dies erfolgt vorzugsweise über eine Kurvenrolle, die auf der Sicherungseinrichtung befestigt ist und über ein passendes Kurvenstück so geführt wird, dass sich die Sicherungseinrichtung öffnet und die Vorformlinge freigibt. Ebenfalls muss für die Aufnahme der Vorformlinge die Sicherungseinrichtung geöffnet werden, um die Vorformlinge von unten nach oben durch die Abschirmplatte befördern zu können.

Die Erfindung betrifft weiter eine Handhabungsvorrichtung zur Halterung von Vorformlingen beim Durchlaufen einer Heizstrecke, wobei der Handhabungsvorrichtung wenigstens eine Sicherungseinrichtung zugeordnet ist, die den Tragring des Vorformlings in der Regel berührungslos untergreift. Die Ausgestaltung dieser Sicherungseinrichtung kann einer der zuvor beschriebenen Ausführungsvarianten entsprechen.

Die Erfindung ist grundsätzlich zur Anwendung in Mikrowellenöfen, Rundläuferöfen, Linearöfen, stationären Öfen etc. geeignet. Weiterhin ist die Verwendung von individuellen Heiztaschen oder Resonatoren denkbar, wobei jeder Vorformling in einer separaten Heiztasche selektiv temperiert wird.

Grundsätzlich wäre es denkbar, dass die Zentriereinrichtung auch an der Heiztasche angebracht ist und/oder als Reflektor dienen könnte.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht einer Heizstrecke (Stand der Technik).
Figur 2a zeigt eine Perspektivansicht einer Handhabungsvorrichtung für einen Vorformling (Stand der Technik).
Figur 2b zeigt einen Querschnitt durch die Handhabungsvorrichtung für einen Vorformling entlang einer Schnittlinie A-A aus der Figur 2a (Stand der Technik).
Figur 3 zeigt eine schematische Ansicht einer Zentriereinrichtung für Vorformlinge.
Figur 4 zeigt einen Querschnitt durch ein Zentrierelement entlang einer Längsachse eines Vorformlings.
Figur 5 zeigt einen Querschnitt durch ein Zentrierelement entlang einer Längsachse eines Vorformlings, der sich in einer Heiztasche befindet.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung sein kann und stellen keine abschließende Begrenzung dar.

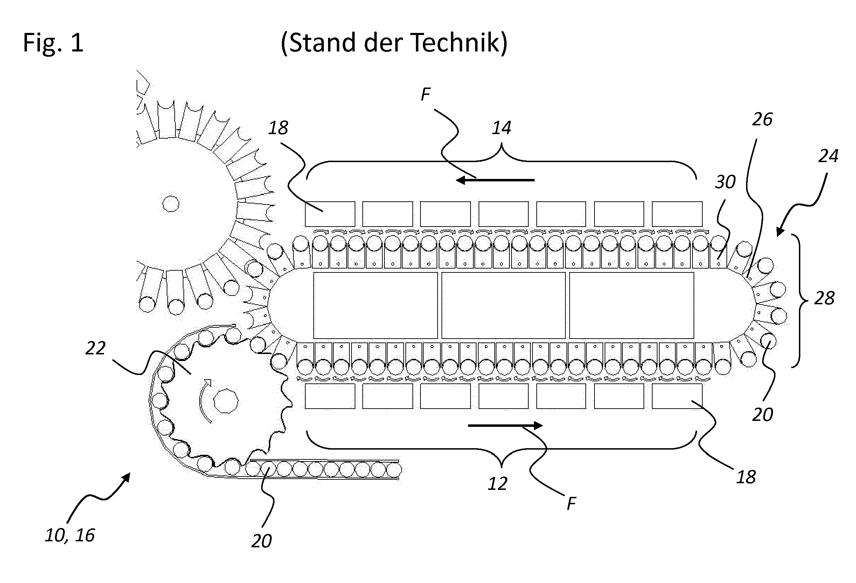

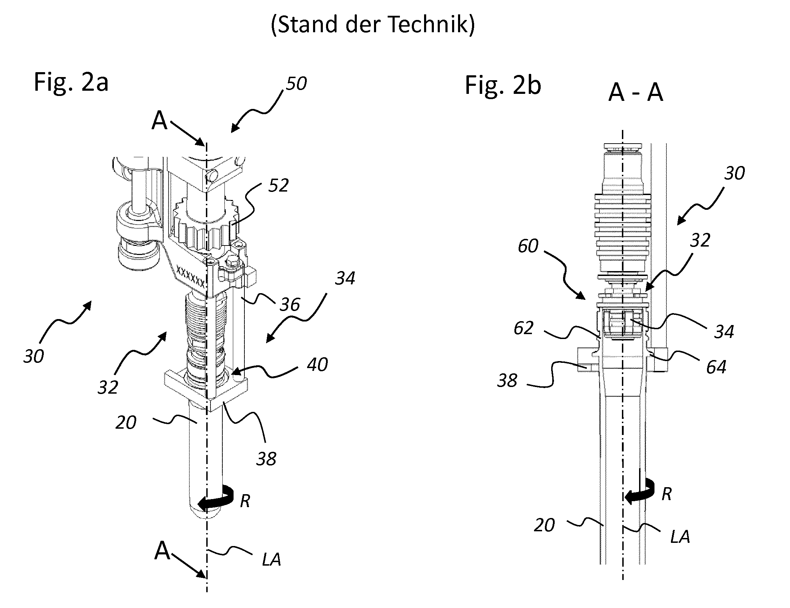

In der **Figur 1** wird eine Heizstrecke 10 eines Ofens 16 dargestellt. In den Ofen 16 werden Vorformlinge 20 über einen Sägezahnstern 22 eingegeben und durchlaufen anschließend die Heizstrecke 10 in Förderbewegung F. Die Vorformlinge 20 werden mittels mehreren Handhabungsvorrichtungen 30 durch den Ofen 16 transportiert. Jede Handhabungsvorrichtung 30 umfasst jeweils mindestens eine Spindel 34 (vgl. Fig. 2a), die drehbar in einem Kettenglied 26 gelagert ist. In der Heizstrecke 10 werden mehrere Kettenglieder 26, mit den darin gelagerten Spindeln 34 verbunden und bilden eine endlos umlaufende Kette 24.

Im Ofen 16 durchlaufen die Vorformlinge 20 zunächst eine erste lineare Heizstrecke 12, in der sie am Umfang gleichmäßig erwärmt werden. Nach einem Umlenkbereich 28 an einem Ende des Ofens 16 werden die Vorformlinge 20 auf einer zweiten geraden Heizstrecke 14 weitergeführt und auf endgültige Temperatur gebracht, bevor diese Vorformlinge 20 in einer Streckblasmaschine (nicht dargestellt) in eine gewünschte Behälterform gebracht werden. In den geraden Bereichen 12, 14 der Heizstrecke 10 sind mehrere Heizkästen 18 angebracht, in denen sich IR-Strahler (nicht dargestellt) und zusätzliche Reflektoren (nicht dargestellt) befinden. Die Reflektoren (nicht dargestellt) sind notwendig, um Strahlungsverluste so gering wie möglich zu halten.

Die **Figur 2a** zeigt eine Perspektivansicht einer Handhabungsvorrichtung 30 für einen Vorformling 20. Die Handhabungsvorrichtung 30 umfasst wenigstens ein Haltemittel 32 und mindestens einen Träger 36. Das Haltemittel 32, welches als Halter 34 beziehungsweise Spindel 34 ausgebildet ist, dient zur Halterung des Vorformlings 20. Am Träger 36 ist senkrecht zur Längsachse LA des Vorformlings 20 eine Abschirmplatte 38 angebracht, die eine Öffnung 40 aufweist, wobei die Öffnung 40 größer ist als der größte Durchmesser des Vorformlings 20.

Während des Transports von mehreren Vorformlingen 20 durch die Heizstrecke 10 (vgl. Fig. 1) werden diese von Handhabungsvorrichtungen 30 gehalten. Geeignete Transportmittel 50 sorgen für die Bewegung der Vorformlinge 20 entlang der Heizstrecke 10. Vorzugsweise werden die Vorformlinge 20 beim Transport durch die Heizstrecke 10 (vgl. Fig. 1) um ihre Längsachse LA über ein jeder Handhabungsvorrichtung 30 zugeordnetes Zahnrad 52 in Rotation R versetzt. Die Zahnräder 52 werden beispielsweise über einen Riemen (nicht dargestellt) angetrieben.

Die **Figur 2b** zeigt einen Querschnitt durch die Handhabungsvorrichtung 30 für einen Vorformlinge 20 entlang einer Schnittlinie A-A aus der Figur 2a. Der Vorformling 20 wird am oben offenen Mündungsbereich 60 über Reibschluss von innen mittels des Haltemittels 32 beziehungsweise des Halters 34 geklemmt. Dadurch wird der Vorformling 20 in seiner Längsachse LA gehalten und über das Zahnrad 52 (vgl. Fig. 2a) in Rotation R versetzt. Um den Mündungsbereich 60 und das Außengewinde 62 des Vorformlings 20 vor ungewünschter Streustrahlung zu schützen ist die Abschirmplatte 38 unterhalb des Tragrings 64 des Vorformlings 20 angeordnet.

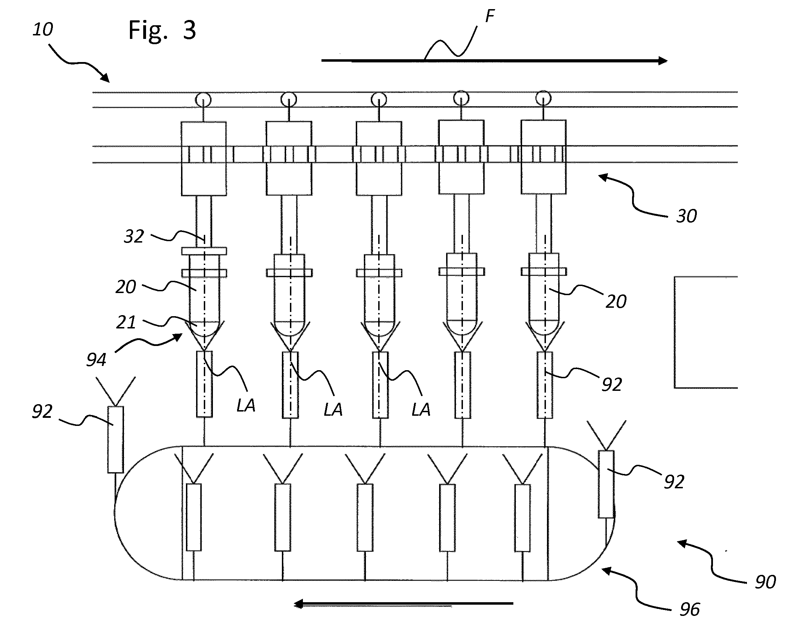

In der **Figur 3** wird eine schematische Ansicht einer Zentriereinrichtung 90 für Vorformlinge 20 dargestellt. Diese Zentriereinrichtung 90 ermöglicht die sichere Aufnahme der Vorformlinge 20 in der Handhabungsvorrichtung 30. Die Zentriereinrichtung 90 weist mindestens ein Zentrierelement 92 auf, das ein Aufnahmemittel 94 umfasst. Dieses Aufnahmemittel 94 umgreift den Bodenbereich 21 der Vorformlinge 20 zumindest teilweise.

Die Zentrierelemente 92 werden während der Aufnahme der Vorformlinge 20 am Haltemittel 32 der Handhabungsvorrichtung 30 kurzzeitig von unten an den Bodenbereich 21 der Vorformlinge 20 zugestellt. Damit die Vorformlinge 20 koaxial am Haltemittel 32 der Handhabungseinrichtung 30 angebracht werden, sind die Zentrierelemente 92 vorzugsweise achssymmetrisch zur Längsachse LA der Vorformlinge 20 angeordnet. Das am Zentrierelement 92 angebrachte Aufnahmemittel 94 umgreift die Vorformlinge 20 bei dieser Zustellung zumindest teilweise.

Die Zentrierelemente 92 der Zentriereinrichtung 90 sind an einer umlaufenden Fördereinrichtung 96 befestigt. Die Fördereinrichtung 96 bewegt sich synchron zur Förderbewegung F der Vorformlinge 20 in der Heizstrecke 10 (vgl. auch Fig.1).

Alternativ werden die Zentrierelemente 92 bei Rundläufermaschinen (nicht dargestellt) auf einer zumindest teilweise kreisförmigen Bahn (nicht dargestellt) geführt.

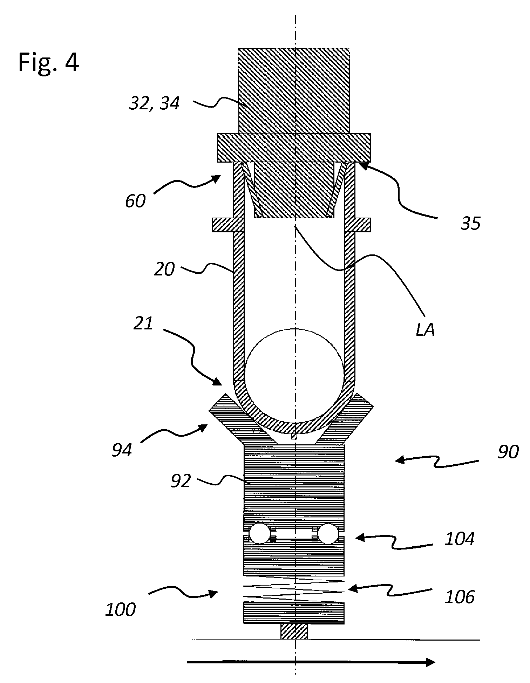

Die **Figur 4** zeigt einen Querschnitt durch ein Zentrierelement 92 entlang der Längsachse LA des Vorformlings 20. Das Zentrierelement 92 weist ein dem Bodenbereich 21 des Vorformlings 20 angepasstes Aufnahmemittel 94 auf. Das Aufnahmemittel 94 kann eine beliebige Form besitzen. Im Ausführungsbeispiel weist das Aufnahmemittel 94 beispielsweise eine Kegelform auf. Das Aufnahmemittel 94 dient dazu, um den Vorformling 20 koaxial zur Längsachse LA am Haltemittel 32 anzubringen.

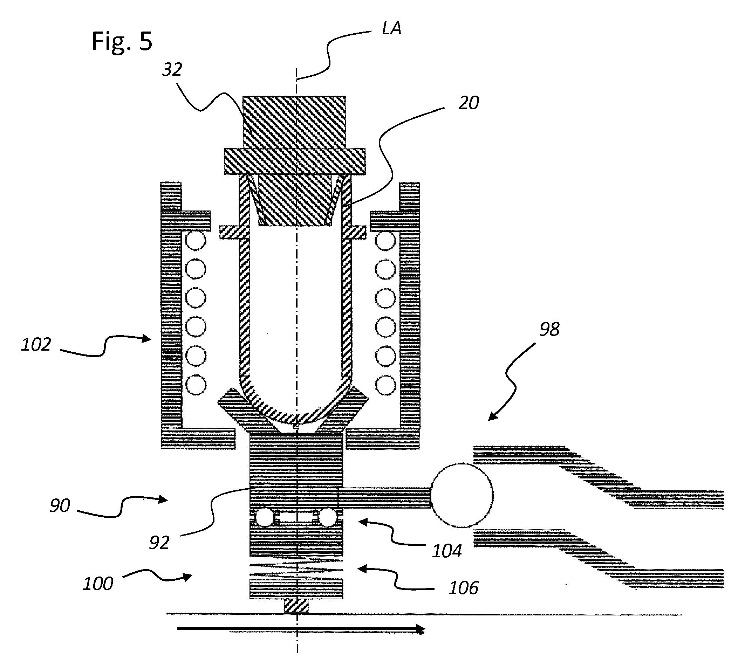

Die Zuführung des Zentrierelements 92 erfolgt vorzugsweise über eine Zwangsführung 98 (vgl. Fig. 5). Das Zentrierelement 92 weist eine Lagerung 100 auf, die federnd gelagert ist und mit der Zwangsführung 98 (vgl. Fig. 5) in Wirkverbindung steht.

Eine Feder 106 dient zum Toleranzausgleich von unterschiedlich schräg angebrachten Vorformlingen 20, aber auch von fertigungsbedingten Toleranzen der Zentriereinrichtung 90 oder der Haltemittel 32. Über die Feder 106 wird die Kraft mit einem gewissen Spielraum definiert, mit der die Anschlagflächen 35 vom Mündungsbereich 60 des Vorformlings 20 und des Haltemittels 32 beziehungsweise Halter 34 aneinander gepresst werden.

In einer bevorzugten Ausführungsform ist die gesamte Zentriereinrichtung 90 oder zumindest das Aufnahmemittel 94 mittels eines Kugellagers 104 drehbar gelagert. Dadurch wird vorzugsweise das Zentrieren auch während einer Drehbewegung des Halters beziehungsweise der Spindel 34 ermöglicht.

In der **Figur 5** wird ein Querschnitt dargestellt, der durch das Zentrierelement 92 entlang der Längsachse LA des Vorformlings 20 verläuft. Der Vorformling 20 befindet sich dabei in einer Heiztasche 102.

Die Zentriereinrichtung 90 (vgl. Fig. 3) kann somit auch Anwendung in Heiztaschen 102 oder in einem Mikrowellenofen (nicht dargestellt) Verwendung finden. Hierzu wird die Zentriereinrichtung 90 über einen Kurvenmechanismus, der in einer Zwangsführung 98 verlaufen kann, zugestellt oder wegbewegt. Alternativ wäre auch eine separate Zustellung des Zentrierelements 92 über einen Servomotor (nicht dargestellt) mit einem Kugelgewindespindel (nicht dargestellt) oder einem Pneumatikzylinder denkbar. Bei der Verwendung von Heiztaschen 102 zur Erwärmung von Vorformlingen 20 wird jeder Vorformling 240 einzeln in einer derartigen Heiztasche 102 erwärmt.

Die Zustellung der Zentrierelemente 92 verläuft jeweils kontinuierlich zur Förderbewegung der Handhabungsvorrichtung 30 (vgl. Fig. 1).

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: Heizstrecke
- 12: erste Heizstrecke
- 14: zweite Heizstrecke
- 16: Ofen
- 18: Heizkasten
- 20: Vorformlinge
- 21: Bodenbereich
- 22: Sägezahnstern
- 24: Kette
- 26: Kettenglied
- 28: Umlenkbereich
- 30: Handhabungsvorrichtung
- 32: Haltemittel
- 34: Halter, Dorn, Spindel
- 35: Anschlagfläche
- 36: Träger / Abstandsmittel
- 38: Abschirmplatte
- 40: Öffnung
- 50: Transportmittel
- 52: Zahnrad
- 60: Mündungsbereich
- 62: Außengewinde
- 64: Tragring
- 66: Außenmantelfläche
- 68: Segment
- 90: Zentriereinrichtung
- 92: Zentrierelement
- 94: Aufnahmemittel
- 96: Fördereinrichtung
- 98: Zwangsführung
- 100: Lagerung
- 102: Heiztasche
- 104: Kugellager
- 106: Feder
- F: Förderbewegung
- LA: Längsachse
- R: Rotation

## Patentansprüche

1. Heizstrecke (10) mit mindestens einer Handhabungsvorrichtung (30) zur Halterung von Vorformlingen (20) beim Durchlaufen der Heizstrecke (10), wobei die Vorformlinge (20) einen oberen offenen Mündungsbereich (60) und ein Außengewinde (62) sowie einen unteren geschlossenen Bodenbereich (21) aufweisen, wobei unterhalb des Außengewindes (62) ein Tragring (64) angeordnet ist, und wobei die Handhabungsvorrichtung (30) mindestens ein Haltemittel (32) umfasst, das zumindest teilweise reibschlüssig in den Mündungsbereich (60) der Vorformlinge (20) eingreift wobei der Handhabungsvorrichtung (30) wenigstens eine mit dem Vorformling (20) in Kontakt bringbare Zentriereinrichtung (90) zugeordnet ist, die am Bodenbereich (21) des Vorformlings (20) angreift, **dadurch gekennzeichnet, dass** die Zentriereinrichtung (90) mindestens ein Zentrierelement (92) für die Vorformlinge (20) aufweist, das den Bodenbereich (21) der Vorformlinge (20) von unten zumindest teilweise umgreift, wobei die Zentrierelemente (92) der Zentriereinrichtung (90) an einer umlaufenden Fördereinrichtung (96) befestigt sind.

2. Heizstrecke (10) nach Anspruch 1, bei der das mindestens eine Zentrierelement (92) zumindest während der Zentrierung achsensymmetrisch zur Längsachse (LA) der Vorformlinge (20) angeordnet ist.

3. Heizstrecke (10) nach einem der Ansprüche 1 bis 2, bei der eine Anschlagfläche (35) des Haltemittels (32) senkrecht zur Längsachse (LA) des Vorformlings (20) oder zur Drehachse des Vorformlings (20) ist.

4. Heizstrecke (10) nach einem der Ansprüche 1 bis 3, bei der das mindestens eine Zentrierelement (92) ein dem Bodenbereich (21) der Vorformlinge (20) angepasstes Aufnahmemittel (94) aufweist.

5. Heizstrecke (10) nach Anspruch 4, bei der das Aufnahmemittel (94) becher-, hohlkegel-, halbkugel-, zylinder-, parabel-, ellipsen-, hyperbel- oder pyramidenförmig ausgestaltet ist.

6. Heizstrecke (10) nach einem der Ansprüche 1 bis 5, bei der die Förderbewegung (F) der Zentriereinrichtung (90) synchron zur Förderbewegung (F) der Vorformlinge (20) verläuft, wobei die Zentrierelemente (92) der Zentriereinrichtung (90) kurzzeitig dem Bodenbereich (21) der Vorformlinge (20) zustellbar sind.

7. Heizstrecke (10) nach einem der Ansprüche 1 bis 6, bei der die Zentriereinrichtung (90) sich über einen Bereich erstreckt, in dem die Vorformlinge (20) noch nicht beheizt werden.

8. Heizstrecke (10) nach einem der vorhergehenden Ansprüche, bei der das mindestens eine Zentrierelement (92) an einem umlaufenden Förderelement angeordnet ist, welches sich mit einer kontinuierlichen Transportgeschwindigkeit bewegt.

9. Heizstrecke (10) nach einem der Ansprüche 1 bis 7, bei der die Zentrierelemente (92) bei Rundläufermaschinen auf einer zumindest teilweise kreisförmigen Bahn geführt sind.

10. Heizstrecke (10) nach einem der vorhergehenden Ansprüche, wobei die Zentrierelemente (92) über eine Zwangsführung (98) zuführbar sind und die Zentrierelemente (92) eine Lagerung (100) aufweisen, die federnd gelagert ist und mit der Zwangsführung (98) in Wirkverbindung steht.

11. Heizstrecke (10) nach einem der vorhergehenden Ansprüche, bei der die gesamte Zentriereinrichtung (90) oder zumindest das Aufnahmemittel (94) mittels eines Kugellagers (104) drehbar gelagert.

12. Heizstrecke (10) nach Anspruch 11, bei der die Zentrierung während einer Drehbewegung eines Halters (34) bzw. einer Spindel ermöglicht ist.

13. Heizstrecke (10) nach einem der vorhergehenden Ansprüche, wobei die Zentriereinrichtung (90) bzw. die Zentrierelemente (92) über einen insbesondere in einer Zwangsführung (98) verlaufenden Kurvenmechanismus zustellbar oder wegbewegbar sind.

14. Heizstrecke (10) nach einem der vorhergehenden Ansprüche, wobei die Zentriereinrichtung (90) bzw. die Zentrierelemente (92) mittels eines Servomotors und einer Kugelgewindespindel oder eines Pneumatikzylinders zustellbar sind.

## Claims

1. A heating section (10) with at least one handling apparatus (30) for holding preforms (20) while they pass through the heating section (10) wherein the preforms (20) comprise an upper, open mouth section (60) and an external thread (62) and also a lower, closed bottom section (21), wherein a carrying ring (64) is arranged below the external thread (62), and wherein the handling apparatus (30) comprises at least one holding means (32), which inserts at least partially friction-lockingly into the mouth section (60) of the preforms (20), wherein the handling apparatus (30) is assigned at least one centering device (90), which is bringable into contact with the preform (20) and which engages at the bottom section (21) of the preform (20), **characterised in that** the centering device (90) has at least one centering element (92) for the preforms (20), which centering element (92) at least partially encompasses the bottom section (21) of the preforms (20) from below, wherein the centering elements (92) of the centering device (90) are fastened at a circulating conveying device (96).

2. The heating section (10) as recited in claim 1 in which the at least one centering element (92) is arranged axisymmetrically to the longitudinal axis (LA) of the preforms (20) at least during centering.

3. The heating section (10) as recited in one of the claims 1 to 2 in which a stop surface (35) of the holding means (32) is perpendicular to the longitudinal axis (LA) of the preform (20) or to the rotation axis of the preform (20).

4. The heating section (10) as recited in one of the claims 1 to 3 in which the at least one centering element (92) has a receiving means (94), which is adapted to the bottom section (21) of the preforms (20).

5. The heating section (10) as recited in claim 4 in which the receiving means (94) is formed to have a cupular, hollow conical, hemispherical, cylindrical, parabolic, elliptical, hyperbolic, or pyramidal shape.

6. The heating section (10) as recited in one of the claims 1 to 5 in which the conveying movement (F) of the centering device (90) runs synchronously with the conveying movement (F) of the preforms (20), wherein the centering elements (92) of the centering device (90) are temporarily advanceable to the bottom section (21) of the preforms (20).

7. The heating section (10) as recited in one of the claims 1 to 6 in which the centering device (90) extends over a section in which the preforms (20) are not being heated yet.

8. The heating section (10) as recited in one of the previous claims in which the at least one centering element (92) is arranged at a circulating conveying element, which moves at a continuous transport speed.

9. The heating section (10) as recited in one of the claims 1 to 7 in which the centering elements (92) in rotary machines are guided along an at least partially circular lane.

10. The heating section (10) as recited in one of the previous claims wherein the centering elements (92) are suppliable via a forced guide means (98), and the centering elements (92) have a bearing (100) that is spring-mounted and in an operative connection with the forced guide means (98).

11. The heating section (10) as recited in one of the previous claims in which the entire centering device (90) or at least the receiving means (94) is rotatably mounted by means of a ball bearing (104).

12. The heating section (10) as recited in claim 11 in which centering is possible during a rotary movement of a holder (34) or of a spindle, as the case may be.

13. The heating section (10) as recited in one of the previous claims wherein the centering device (90) or the centering elements (92), as the case may be, are advanceable or retractable via a curve mechanism, in particular via a curve mechanism running in a forced guide means (98).

14. The heating section (10) as recited in one of the previous claims wherein the centering device (90) or the centering elements (92), as the case may be, are advanceable by means of a servomotor and a ball screw or by means of a pneumatic cylinder.

## Revendications

1. Section de chauffage (10) comprenant au moins un dispositif de manipulation (30) pour maintenir des préformes (20) lorsqu'elles parcourent la section de chauffage (10), lesdites préformes (20) présentant une zone de bouche (60) supérieure ouverte et un filet extérieur (62) ainsi qu'une zone de fond (21) inférieure fermée, une bague de manutention (64) étant disposée au-dessous du filet extérieur (62), et ledit dispositif de manipulation (30) comprenant au moins un moyen de maintien (32) qui s'engage, au moins en partie, par friction dans ladite zone de bouche (60) des préformes (20), au dispositif de manipulation (30) étant associé au moins un dispositif de centrage (90) qui peut être mis en contact avec la préforme (20) et qui se prend sur la zone de fond (21) de la préforme (20), **caractérisée par le fait que** ledit dispositif de centrage (90) présente au moins un élément de centrage (92) pour les préformes (20) qui, au moins en partie, se prend d'en bas autour de la zone de fond (21) des préformes (20), les éléments de centrage (92) du dispositif de centrage (90) étant fixés sur un dispositif de transport (96) circulant.

2. Section de chauffage (10) selon la revendication 1, dans laquelle ledit au moins un élément de centrage (92) est disposé à symétrie axiale par rapport à l'axe longitudinal (LA) des préformes (20), au moins durant le centrage.

3. Section de chauffage (10) selon l'une quelconque des revendications 1 à 2, dans laquelle une surface de butée (35) du moyen de maintien (32) est perpendiculaire à l'axe longitudinal (LA) de la préforme (20) ou à l'axe de rotation de la préforme (20).

4. Section de chauffage (10) selon l'une quelconque des revendications 1 à 3, dans laquelle ledit au moins un élément de centrage (92) présente un moyen de réception (94) qui est adapté à la zone de fond (21) des préformes (20).

5. Section de chauffage (10) selon la revendication 4, dans laquelle ledit moyen de réception (94) est configuré en forme de gobelet, de cône creux, d'hémisphère, de cylindre, de parabole, d'ellipse, d'hyperbole ou de pyramide.

6. Section de chauffage (10) selon l'une quelconque des revendications 1 à 5, dans laquelle le mouvement de transport (F) du dispositif de centrage (90) est en synchronisme avec le mouvement de transport (F) des préformes (20), les éléments de centrage (92) du dispositif de centrage (90) pouvant être approchés pour peu de temps de la zone de fond (21) des préformes (20).

7. Section de chauffage (10) selon l'une quelconque des revendications 1 à 6, dans laquelle le dispositif de centrage (90) s'étend sur une zone dans laquelle les préformes (20) ne sont pas encore chauffées.

8. Section de chauffage (10) selon l'une quelconque des revendications précédentes, dans laquelle ledit au moins un élément de centrage (92) est disposé sur un élément de transport circulant qui se déplace à une vitesse de transport continue.

9. Section de chauffage (10) selon l'une quelconque des revendications 1 à 7, dans laquelle, dans le cas de machines rotatives, les éléments de centrage (92) sont guidés sur une trajectoire au moins en partie circulaire.

10. Section de chauffage (10) selon l'une quelconque des revendications précédentes, dans laquelle les éléments de centrage (92) peuvent être amenés par un guidage forcé (98) et les éléments de centrage (92) présentent un arrangement formant palier (100) qui est monté sur ressort et est en liaison active avec le guidage forcé (98).

11. Section de chauffage (10) selon l'une quelconque des revendications précédentes, dans laquelle l'ensemble du dispositif de centrage (90) ou au moins ledit moyen de réception (94) est logé à rotation par l'intermédiaire d'un roulement à billes (104).

12. Section de chauffage (10) selon la revendication 11, dans laquelle le centrage est permis durant un mouvement de rotation d'un support (34) ou bien d'une broche.

13. Section de chauffage (10) selon l'une quelconque des revendications précédentes, dans laquelle ledit dispositif de centrage (90) ou bien les éléments de centrage (92) peuvent être approchés ou écartés par le biais d'un mécanisme à came passant en particulier dans un guidage forcé (98).

14. Section de chauffage (10) selon l'une quelconque des revendications précédentes, dans laquelle le dispositif de centrage (90) ou bien les éléments de centrage (92) peuvent être approchés au moyen d'un servomoteur et d'une vis à billes ou d'un vérin pneumatique.
